# EUROPEAN PATENT APPLICATION

(11) **EP 1 369 864 A2**
(43) Date of publication of application: **10.12.2003**
(21) Application number: 03012946.4
(22) Date of filing: 06.06.2003
(51) Int. Cl.: G11B 9/00

(54) **Dielectric recording/reproducing head, dielectric recording medium unit, and dielectric recording/reproducing apparatus**

(30) Priority: 06.06.2002 JP 2002166250
(71) Applicant: Pioneer Corporation, Meguro-ku, Tokyo (JP); Cho, Yasuo, Sendai-shi, Miyagi-ken (JP)
(72) Inventor: Cho, Yasuo, Sendai-shi, Miyagi (JP); Onoe, Atsushi, Tsurugashima-shi, Saitama-ken (JP)
(74) Representative: Reinhard - Skuhra - Weise & Partner

(57) **Abstract**

A dielectric recording medium unit is provided with: the dielectric recording / reproducing head; a tracking mechanism of the dielectric recording / reproducing head; the dielectric recording medium placed facing to a probe of dielectric recording / reproducing head; and a X-Y stage for parallel-translating the dielectric recording medium. These components are stored in a package. The package is provided with: an electrical connection device for allowing the electrical connection with an external apparatus; and mechanical connection devices for allowing the mechanical connection with the external apparatus. The dielectric recording / reproducing head is provided with: the probe; a return electrode for returning the electric field applied from the probe; an inductor placed between the probe and the return electrode; and an oscillator.

## Description

### BACKGROUND OF THE INVENTION

### 1. Field of the Invention

The present invention relates to a dielectric recording / reproducing head, a dielectric recording medium unit, and a dielectric recording / reproducing apparatus for recording information in or reproducing information from microdomains in a dielectric substance, especially in a ferroelectric substance, with high density.

### 2. Description of the Related Art

Recently, many types of dielectric materials and piezoelectric materials have been developed, and most of them are used for ultrasonic elements, optical elements, a memory and the like. A method of measuring a spontaneous polarization distribution of the dielectric material or local anisotropy of the piezoelectric material has been also developed. Furthermore, by using such a method, some techniques of recording information in the dielectric material and reproducing the information from the dielectric material have recently been developed.

As conventional techniques associated with high-density information recording / reproducing, there are magnetic recording, thermal recording and the like. Recently, ferroelectric recording was proposed as a new technique, and it is being developed now.

In the longitudinal recording of the magnetic recording, which is typically used in a hard disc drive (HDD), its recording density is limited to about 100 G bit/inch² due to thermal fluctuation.

As the thermal recording, there are a method in which information is recorded in a recording medium made of polymer with a mircoheater formed at a probe tip, a method in which information is recorded in a recording medium made of a phase change material with an electron emission source, a method in which information is recorded in a recording medium made of a phase change material by using near-field light, and the like. However, these methods have the limitations of the recording density, which is between 500 G and 1 T bit/inch², due to intervening heat conduction.

Furthermore, there is a system in which the ferroelectric substance is used as a recording medium, information is recorded in the ferroelectric substance by applying a voltage through a probe head, and the recorded information is reproduced by piezoelectric vibration caused by the application of a voltage from the probe head. In this case, since a signal transfer rate in the reproduction is determined from the resonance frequency of a cantilever to which the probe head is attached, the maximum value may be only about several M bit/Sec.

In addition, a published Japanese patent application (Japanese Patent Application Laying Open NO. Hei 10-334525) discloses a technique related to an apparatus for recording information by moving electric charges to a position corresponding to a pin-shaped electrode on a recording medium by applying a voltage to the pin-shaped electrode, or by reversing spontaneous polarization by applying a voltage to the pin-shaped electrode. However, in this technique, an optical lever method is used for reproducing information from a recording medium. Therefore, the reproducing rate is restricted by the resonance frequency of the pin-shaped electrode (a cantilever). Moreover, the above-mentioned application also discloses a method of reproducing information from a recording medium by using Scanning Capacitance Microscope. However, another method is required to improve a recording density, a reproduction rate and accuracy of reproduction. Furthermore, it is required to increase a resolution when information recorded in the dielectric material is read. If the resolution is increased, the recording density can be increased and the accuracy of reproduction can be improved.

### SUMMARY OF THE INVENTION

It is therefore an object of the present invention to provide a dielectric recording / reproducing head, a dielectric recording medium unit, and a dielectric recording / reproducing apparatus, which realize the downsizing of the recording / reproducing head and the improvement of a recording density and a recording / reproducing rate.

The above object of the present invention can be achieved by a dielectric recording / reproducing head provided with: a first electrode for applying a high frequency signal to a dielectric material of a dielectric recording medium; a second electrode for returning the high frequency signal applied to the dielectric material by the first electrode; an inductor placed between the first electrode and the second electrode; and an oscillator for generating the high frequency signal having a frequency determined by an inductance of the inductor and a capacitance including a capacitance corresponding to a nonlinear dielectric constant of the dielectric material just under the first electrode. The first electrode, the second electrode, the inductor and the oscillator are assembled in a continuous space.

This dielectric recording / reproducing head reproduces the information from the dielectric recording medium according to SNDM (Scanning Nonlinear Dielectric Microscopy) method. The SNDM method is introduced in detail by the present inventor, Yasuo Cho, in Oyo Butsuri Vol. 67, No. 3, p327 (1998).

Information (e.g. digital data) is recorded in the dielectric material of the dielectric recording medium. The information is recorded as the polarization directions of the dielectric material. When the information is read and reproduced from the dielectric recording medium, a direct current bias voltage or an alternating current voltage is applied to the dielectric material. In this state, the high frequency signal is applied to the dielectric material of the dielectric recording medium through the first electrode. By applying the direct current bias voltage (or the alternating current voltage) and the high frequency signal, the high frequency electric field is generated in the dielectric material. The high frequency electric field is smaller than the coercive electric field of the dielectric material. The high frequency signal is returned to the second electrode through the dielectric material. The frequency of the high frequency signal is determined by the inductance of the inductor and the capacitance between the first electrode and the second electrode through the dielectric material. Namely, the inductance of the inductor and the capacitance between the first electrode and the second electrode constitute a resonance circuit. The resonance frequency of the resonance circuit is the frequency of the high frequency signal. The capacitance between the first electrode and the second electrode includes the capacitance corresponding to the nonlinear dielectric constant of the dielectric material just under the tip of the first electrode. The nonlinear dielectric constant of the dielectric material varies with the polarization direction of the dielectric material. Since the polarization direction of the dielectric material corresponds to the recorded information, the capacitance between the first electrode and the second electrode changes according to the recorded information. According to the change of the capacitance, the frequency of the high frequency signal changes. The change of the frequency of the high frequency signal is detected, so that the recorded information is reproduced. In the SNDM method, the change of the capacitance corresponding to the nonlinear dielectric constant of the dielectric material is directly detected. Therefore, resolution about reproduction of information is very high.

In the dielectric recording / reproducing head of the present invention, the first electrode, the second electrode, the inductor and the oscillator are assembled in a continuous space. For example, these members are assembled in one small space located on or above a recording surface of the dielectric recording medium. In this small space, these members are arranged close to each other, and these are electrically connected with each other by conductive materials in such a condition that the resonance circuit or the high frequency oscillation circuit is constructed. In the resonance circuit or the high frequency oscillation circuit, the route that the high frequency signal is returned is formed between the tip of the first electrode and the second electrode through the inside of the dielectric material of the dielectric recording medium. This route is an imaginary line through which electric signals pass. In order to detect the slight change of the capacitance corresponding to the nonlinear dielectric constant of the dielectric material, it is preferable that the length of the route that the high frequency signal is returned is short (i.e. the distance between the first electrode and the second electrode is short.). According to the dielectric recording / reproducing head of the present invention, the first electrode and the second electrode are arranged in the continuous and small space. Therefore, the route that the high frequency signal is returned can be shortened.

On the other hand, when information is recorded in the dielectric material of the dielectric recording medium, a recording signal containing the information to be recorded, such as a pulse signal, is applied to the dielectric material through the first electrode or another electrode which is used for recording only. Alternatively, the recording signal may be applied through an electrode which is formed on the back surface of the dielectric material. The recording signal has a voltage that it is possible to generate an electric field larger than the coercive electric field of the dielectric material. Therefore, the polarization directions of the dielectric material are changed according to the information contained in the applied recording signal. Thereafter, these polarization directions are kept due to spontaneous polarization of the dielectric (ferroelectric) material.

With respect to the shape of the first electrode, a pin shape or needle-shape, a cantilever-shape, and the like can be adopted as specific structures of the first electrode. The first electrode having these shapes is collectively referred to as the "probe" in the present application as occasion demands.

In one aspect of the dielectric recording / reproducing head of the present invention, the first electrode, the second electrode and the oscillator are assembled on a single solid substance.

According to this aspect, they are placed so closely that the extremely compact dielectric recording / reproducing head can be constructed in the common structure. Furthermore, the short route that the high frequency signal returns can be formed.

The above object of the present invention can be achieved by a dielectric recording / reproducing head provided with: a plurality of first electrodes for applying high frequency signals to a dielectric material of a dielectric recording medium respectively; a second electrode for returning the high frequency signals applied to the dielectric recording medium by the plurality of first electrodes; an inductor placed between the plurality of first electrodes and the second electrode; an oscillator for generating the high frequency signals each having a frequency determined by an inductance of the inductor and a capacitance including a capacitance corresponding to a nonlinear dielectric constant of the dielectric material just under respective one of the plurality of first electrodes; and a low-cut filter placed between the oscillator and a signal supply source for supplying a plurality of signals to the plurality of first electrodes respectively. In this head, the plurality of first electrodes, the second electrode, the inductor, the oscillator and the low-cut filter are assembled in a continuous space.

In this head, the number of the first electrodes is more than two. For example, several, several tens of, several hundreds of or several thousands of first electrodes may be placed in the head. For example, these first electrodes constitute a multi-probe array. When information recorded in the dielectric recording medium is read and reproduced, all of the first electrodes in the array or the first electrodes partially selected from the array are used. Like the above-mentioned dielectric recording / reproducing head of single electrode type, the SNDM method is used for reproduction of information.

In the dielectric recording / reproducing head of the present invention, the first electrodes, the second electrode, the inductor, the oscillator and the low-cut filter are assembled in a continuous space. For example, these members are assembled in one small space located on or above a recording surface of the dielectric recording medium. In this small space, these members are arranged close to each other, and these are electrically connected with each other by conductive materials in such a condition that the resonance circuit or the high frequency oscillation circuit is constructed. Especially, since the first electrodes, the dielectric material and the second electrodes are located close to each other, the short route that the high frequency signals return can be formed.

The low-cut filter is used to prevent the recording signals, the direct current bias voltages or the alternating current voltages from flowing into the oscillator. It is preferable that the low-cut filter contains low-cut filter units (e.g. the units each constructed by an inductor and a capacitance) whose number is corresponding to the number of the first electrodes, for example.

In one aspect of the dielectric recording / reproducing head of the present invention, the first electrodes, the second electrode, the oscillator and the low-cut filter are assembled on a single solid substance.

According to this aspect, they are placed so closely that the extremely compact dielectric recording / reproducing head can be constructed in the common structure. Furthermore, the short route that the high frequency signal(s) returns can be formed.

In another aspect of the dielectric recording / reproducing head of the present invention, the size of the dielectric recording / reproducing head is smaller than the wavelength of the high frequency signal, and said size is smaller than 30 mm.

According to this aspect, there are broad options in the conditions of impedance matching, and thus it is possible to facilitate the impedance matching. For example, if the frequency of the high frequency signal (i.e. the resonance frequency of the resonance circuit) is 1 GHz, the wavelength is about 30 cm. In this case, the size of the head is a 30 mm or less than 30 mm cube. If the frequency is low, the wavelength is long. In this case, the size of the head is 30 mm or less than 30 mm. In this manner, if the head size is smaller than the resonance frequency, it is possible to facilitate the impedance matching, and thus it is possible to make it easy to design the head, place and adjust components, and the like.

In another aspect of the dielectric recording / reproducing head of the present invention, all of or a part of the constitutional members of the dielectric recording / reproducing head are integrated.

According to this aspect, the first electrode or electrodes, the second electrode, the inductor, the oscillator, and further the filter, which are the constitutional members of the dielectric recording / reproducing head, are integrated by, for example, a Monolithic Microwave Integrated Circuits (MMIC) technique to form the extremely compact head.

The above object of the present invention can be achieved by a dielectric recording medium unit provided with: a dielectric recording / reproducing head; a dielectric recording medium provided with a dielectric material; and a package for enclosing the dielectric recording / reproducing head and the dielectric recording medium.

As the dielectric recording / reproducing head in this unit, the above-mentioned dielectric recording / reproducing head of single electrode type or multi-electrode (multi-probe) array type may be used.

According to the dielectric recording medium unit of the prevent invention, there are packaged the head for recording / reproducing and the recording medium provided with the dielectric material or materials. Attaching this package to or detaching it from the recording / reproducing apparatus body allows the handling, such as exchange of the recording medium. Since the head and the medium are always in pairs, the unit is excellent in stability.

In one aspect of the dielectric recording medium unit of the prevent invention, the dielectric recording medium is provided with: a substrate; and at least two dielectric material membranes which are formed on one surface and an opposite surface of the substrate respectively.

According to this aspect, the recording medium has a larger storage capacity than that of a recording medium having the dielectric material on its one side.

In another aspect of the dielectric recording medium unit of the prevent invention, the dielectric material is a ferroelectric material.

According to this aspect, the ferroelectric material is used for the medium material. The ferroelectric material is a dielectric material in which the direction of the spontaneous polarization is changed by applying a voltage and the directions of the polarization maintain in the condition that the applied voltage is zero.

In another aspect of the dielectric recording medium unit of the prevent invention, the ferroelectric material is LiTaO3.

According to this aspect, as the medium material, LiTaO₃ is used in which the polarization can be easily reversed even by the application of an electric field with the probe because of its low dielectric constant. It is possible to easily construct the unit by a predetermined method so as to be in such a form of the dielectric recording medium that recording is performed with respect to the Z surface of the LiTaO₃, where a plus surface and a minus surface of the polarization are in a 180-degree domain relationship.

In another aspect of the dielectric recording medium unit of the prevent invention, the dielectric recording medium unit further includes a moving device for linearly moving either of the dielectric recording medium and the first electrode of the dielectric recording / reproducing head.

According to this aspect, either the recording medium or the head is mounted on a X-Y stage or the like to perform the two-dimensional linear movement. Data is recorded linearly in the recording medium.

In another aspect of the dielectric recording medium unit of the prevent invention, the dielectric recording medium unit further includes a rotating device for rotating the dielectric recording medium.

According to this aspect, the recording medium is formed in a disc shape, and the rotation of this recording medium allows the relative movement to the head.

In another aspect of the dielectric recording medium unit of the prevent invention, the dielectric recording medium unit further includes a tracking device for enabling the first electrode of the dielectric recording / reproducing head to track an information track recorded in the dielectric recording medium.

According to this aspect, the probe or probes of the head can accurately trace on the track of the recording medium.

In another aspect of the dielectric recording medium unit of the prevent invention, the first electrode of the dielectric recording / reproducing head and the dielectric material of the dielectric recording medium are placed with a predetermined space.

According to this aspect, the probe or probes of the head and the recording medium are not touched, so that the durability of the probe or probes and the recording medium improves.

In another aspect of the dielectric recording medium unit of the prevent invention, a lubricant is provided between the first electrode of the dielectric recording / reproducing head and the dielectric material of the dielectric recording medium.

According to this aspect, the lubricant is provided between them, so that the durability of the probe or probes and the recording medium improves more.

In another aspect of the dielectric recording medium unit of the prevent invention, the lubricant is an insulating material.

According to this aspect, with respect to the probe or probes, the insulation performance from other conductive members is ensured while an electric field corresponding to recording data is applied to the dielectric material.

In another aspect of the dielectric recording medium unit of the prevent invention, the lubricant is a fluorinated lubricant.

According to this aspect, the fluorinated lubricant is used as the lubricant, which has an excellent lubricating ability and which is chemically stable.

In another aspect of the dielectric recording medium unit of the prevent invention, the package is filled with an inert gas.

According to this aspect, the chemical stability of the probe, the recording medium, and the like enclosed in the package improves.

In another aspect of the dielectric recording medium unit of the prevent invention, the package comprises a vibration proof device for cutting off vibration transmitted from the outside of the dielectric recording medium unit.

According to this aspect, even in the environment with much external vibration, such as with mounting the unit on a vehicle or the like, it is possible to reduce the transmission of the vibration to the mechanism devices in the package, and thus data can be recorded / reproduced with less error.

In another aspect of the dielectric recording medium unit of the prevent invention, the package comprises an electrical connection device detachable to another member.

According to this aspect, it is possible to easily take the electrical connection of the dielectric recording medium unit to a case of another apparatus provided with a power supply circuit, a processing circuit, and the like, or it is possible to separate it from the case. This ensures the replaceability of the dielectric recording medium unit with respect to the apparatus.

The above object of the present invention can be achieved by a dielectric recording / reproducing apparatus for recording information in a dielectric recording medium and for reproducing the information from the dielectric recording medium. This apparatus is provided with: a dielectric recording medium unit comprising a dielectric recording / reproducing head, a dielectric recording medium, and a package for enclosing the dielectric recording / reproducing head and the dielectric recording medium; an alternating current signal generation device for generating an alternating current signal whose frequency is lower than a frequency of a high frequency signal to generate an alternating electric field in a dielectric material of the dielectric recording medium; an information processing device for processing the information to be recorded in the dielectric recording medium and the information reproduced from the dielectric recording medium; a control signal generation device for generating control signals for the dielectric recording medium unit; and a driving device for driving the dielectric recording medium unit on the basis of the control signals by the control signal generation device.

According to the dielectric recording / reproducing apparatus of the present invention, it uses the above-described dielectric recording medium unit (including its various aspects) as the recording medium having the replaceability and is provided with the unit and an apparatus provided with various electrical devices for performing the recording / reproducing operations of this dielectric recording medium unit. The dielectric recording medium unit and the apparatus can be attached or detached by a mechanical connection device having a detachable structure. Moreover, a mechanism device for attaching the dielectric recording / reproducing apparatus to another or other apparatuses may be also provided.

In one aspect of the dielectric recording / reproducing apparatus of the prevent invention, the dielectric recording / reproducing apparatus further includes a semiconductor memory for temporarily storing the information to be recorded in the dielectric recording medium or the information reproduced from the dielectric recording medium.

According to this aspect, data to be recorded in the dielectric recording medium or reproduced data can be temporarily stored in this semiconductor memory. While considering the timing for recording /reproducing, the data is sequentially transmitted to the head, or the data is outputted to the exterior. The semiconductor memory is also used as a data memory device for formatting, encrypting, and decoding data.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a schematic diagram showing a first embodiment of a dielectric recording / reproducing head of the present invention;
FIG. 2 is a schematic diagram to explain information recording / reproducing with respect to a dielectric substance;
FIG. 3 is a schematic diagram showing a second embodiment of the dielectric recording / reproducing head of the present invention;
FIG. 4 is a schematic diagram showing a first embodiment of a dielectric recording medium unit of the present invention;
FIG. 5 is a schematic diagram showing a second embodiment of the dielectric recording medium unit of the present invention;
FIG. 6 is a schematic diagram showing one example of a disc-shaped recording medium with ferroelectric recording layers provided for its both sides;
FIG. 7 is a schematic diagram showing such a condition that a lubricant is filled between the recording layer of the dielectric substance and a probe;
FIG. 8 is a schematic diagram showing a structure example of a dielectric recording / reproducing apparatus using the first embodiment of the dielectric recording medium unit;
FIG. 9 is a schematic diagram showing a structure example of a dielectric recording / reproducing apparatus using the second embodiment of the dielectric recording medium unit; and
FIG. 10 is a block diagram showing the structure of a circuit block of the dielectric recording / reproducing apparatus associated with the present invention.

### DETAILED DESCRIPTION OF THE PREFERRED EMBODIMENTS

### (First Embodiment of Dielectric Recording / Reproducing Head)

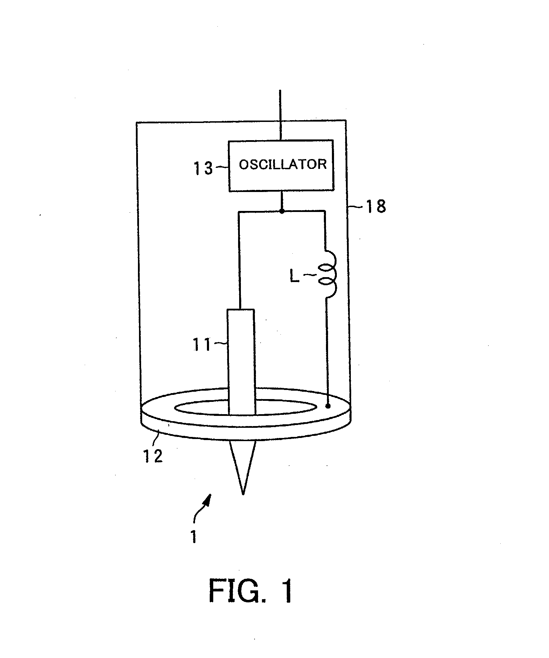

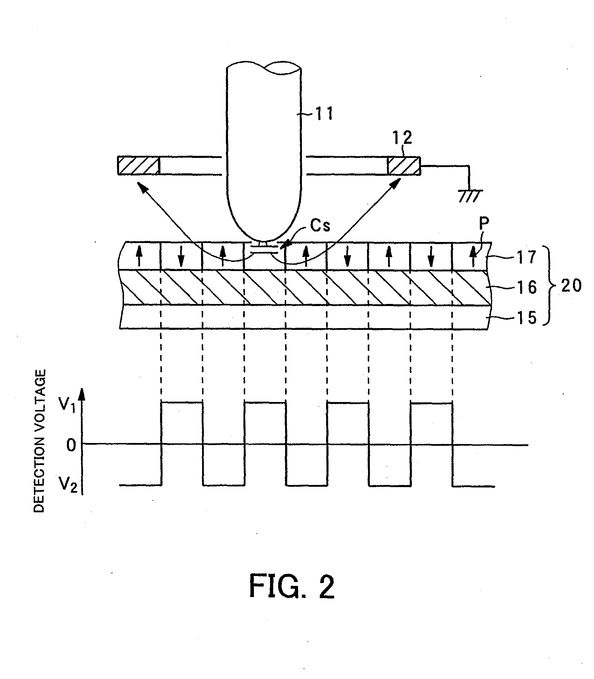

The first embodiment of the dielectric recording / reproducing head associated with the present invention will be explained with reference to FIG. 1 and FIG. 2.

As shown in FIG. 1, a dielectric recording / reproducing head 1 is provided with: a probe 11 for applying an electric field with its tip portion facing to a dielectric material of a dielectric recording medium; a return electrode 12 for returning the electric field applied from the probe 11; an inductor L placed between the probe 11 and the return electrode 12; and an oscillator 13 which oscillates at a resonance frequency determined from at least the inductor L and a capacitance (e.g. a capacitance Cs in FIG. 2) in a portion formed in the dielectric material just under the probe 11 and polarized correspondingly to record information. These constitutional elements are formed in one piece in a common base material 18.

The probe 11 is a conductive member, or an insulating member coated with a conductive film. The tip portion facing to the dielectric material is hemispherical, having a predetermined radius. This radius is an important factor in determining the radius of a polarization formed in the dielectric material correspondingly to record data and determines the recording density, so it is extremely small, on the order of 10 nm. Data is recorded by applying a voltage to this probe 11 to form in the dielectric material a domain polarized in a predetermined direction, while the recorded data is picked up on the basis of the capacitance corresponding to the polarization.

The return electrode 12 is an electrode for returning the electric field applied to the dielectric material from the probe 11 and is placed so as to surround the probe 11. Incidentally, the return electrode 12 is not limited to an illustrated ring-shape, and any form may be used if shaped and placed to allow the return of the electric field from the probe 11 without resistance.

The inductor L is placed between the probe 11 and the return electrode 12, and may be formed with a microstripline, for example. The inductor L and the capacitance Cs constitute a resonance circuit. The inductance of the inductor L is determined so that this resonance frequency, f = 1/2π √LCs, is about 1 GHz, for example. Actually, not only the capacitance Cs but also a so-called stray capacitance or floating capacitance C0 influences the resonance frequency f. Therefore, the capacitive component of the resonance circuit actually includes the stray capacitance C0. Namely, the actual capacitive component is Cs + C0. However, since the recording / reproducing head of the present invention takes a structure for compact placement in view of the stray capacitance C0, the C0 can be assumed to be practically a constant when reproducing a signal by the SNDM. The change of the resonance frequency f according to a capacitance change Δ Cs of the Cs is useful for the signal reproduction, Thus, the resonance frequency f may be simply expressed as a function of the capacitance Cs and the inductor L.

The oscillator 13 is an oscillator which oscillates at a frequency determined from the inductor L and the capacitance Cs. The oscillation frequency varies, depending on the change of the capacitance Cs. Therefore, frequency modulation (FM modulation) is performed correspondingly to the change of the capacitance Cs determined by the polarization domain corresponding to recorded data. By demodulating this FM modulation, it is possible to read the recorded data.

The base material 18 is equipped in one piece with and holds the probe 11, the return electrode 12, the inductor L and the oscillator 13. The base material 18 may be made of an electric conductor and may be made into a case shape, so as to have an effect of electromagnetic wave cut-off.

The size of the head 1 is smaller than the wavelength of the resonance frequency (i.e. the oscillation frequency of the oscillator 13). If the wavelength of the resonance frequency is longer than 30 mm, the size of the head 1 is 30 mm or less than 30 mm. For example, if the resonance frequency is 1 GHz, the wavelength is about 30 cm, so that the head size will be an about 30 mm cube. If the frequency is low, the wavelength is substantially long, so that the head size will be 30 mm or less than 30 mm. If the head size is smaller than the oscillation frequency of the oscillator 13, it is possible to facilitate impedance matching. Thus, it is possible to design the head 1 easily, and it is possible to place and adjust the components of the head 1 easily.

Incidentally, if there is only one probe 11, the head can take the following two forms: one is that record data and an alternating current (AC) signal superimposed thereon are applied to the dielectric recording medium side with the probe 11 earthed; and the other is that record data and an AC signal superimposed thereon are applied to the probe 11 with the dielectric recording medium side earthed.

Now, the relationship among the probe 11, the return electrode 12 and the dielectric recording medium is explained with reference to FIG. 2. A dielectric recording medium 20 is provided with: a substrate 15; an electrode 16 placed on the substrate 15; and a dielectric material 17 placed on the electrode 16. The directions of polarizations P of the dielectric material 17 corresponds to record data. A ferroelectric substance, e.g. LiTaO_{3,} may be used as the dielectric material 17. The Z surface of LiTaO₃ may be used as a recording surface for recording the record data. In the Z surface, a plus surface and a minus surface of the polarization are in a 180-degree domain relationship.

The probe 11 touches the dielectric material 17, or faces to it with a small space. Corresponding to the radius of the tip portion of the probe 11, a polarization domain is constructed in the dielectric material 17. If a voltage is applied to this probe 11, an electric field returns to the return electrode 12 via the dielectric material 17. At this time, the capacitance Cs, which corresponds to a polarization P in the dielectric material 17 on or under the tip portion of the probe 11, participates in the resonance circuit made with the inductance L. By this, the oscillation frequency comes to depend on the capacitance Cs. By demodulating an oscillation signal which is FM-modulated on the basis of this capacitance Cs, a detection voltage shown in FIG. 2 is outputted, and the recorded data is reproduced. On the other hand, in data recording, the recording is performed by applying a voltage corresponding to the data to the probe 11 and thus determining the polarization direction of the dielectric material 17. The voltage applied to the probe 11 at this time has a high level so as to generate an electric field stronger than the coercive electric field of the dielectric material.

### (Second Embodiment of Dielectric Recording / Reproducing Head)

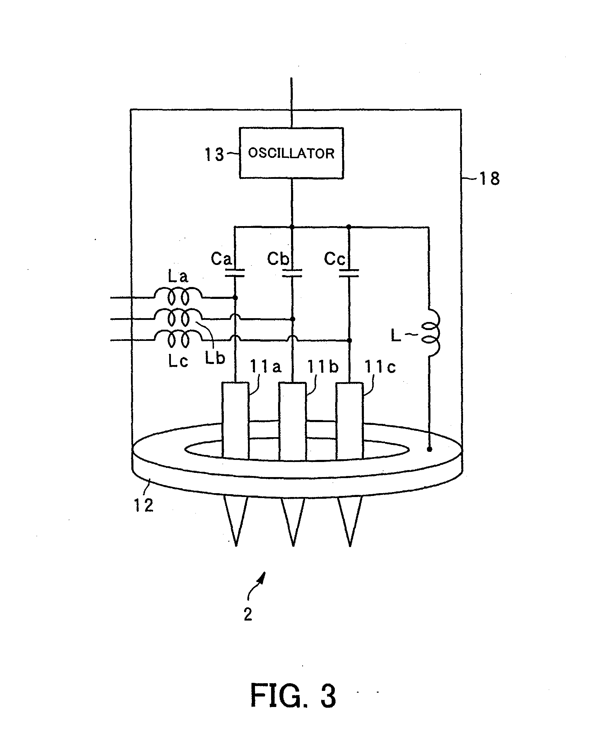

The second embodiment of the dielectric recording / reproducing head associated with the present invention will be explained with reference to FIG. 3.

A dielectric recording / reproducing head 2 is provided with: a plurality of probes 11a, 11b and 11c for applying electric fields with their tip portions facing to dielectric materials of a dielectric recording medium; the return electrode 12 for returning the electric fields applied from the probes 11a 11b and 11c; the inductor L placed between the probes 11a 11b and 11c and the return electrode 12; inductors La, Lb, Lc and capacitances Ca, Cb, Cc, which constitute the low cut (LC) filters; and the oscillator 13 which oscillates at a resonance frequency determined from the inductor L and the capacitances Cs in portions formed on the dielectric materials just under the probes 11a 11b and 11c and polarized correspondingly to record data. These constitutional elements are formed in one piece in the common base material 18.

The probes 11a 11b and 11c are conductive members, or insulating members coated with a conductive film. The tip portion facing to the dielectric material is hemispherical, having a predetermined radius. Since this radius is an important factor in determining the radius of the polarization formed in the dielectric material corresponding to record data, and thus determines the recording density, it is extremely small, on the order of 10 nm. Data is recorded by applying voltages to these probes 11a, 11b and 11c to form, in the dielectric materials, domains polarized in predetermined directions. On the other hand, the recorded data is picked up on the basis of the capacitance corresponding to the polarization. Incidentally, the number of the probes is not limited to three as illustrated in FIG. 3.

The return electrode 12 is an electrode for returning the high-frequency electric fields applied to the dielectric material from the probes 11a, 11b and 11c, and is placed so as to surround the probes 11a, 11b and 11c Incidentally, the return electrode 12 is not limited to an illustrated ring-shape, and any form may be used if shaped and placed to allow the return of the high-frequency electric fields from the probes 11a, 11b and 11c without resistance.

The inductor L is placed between the probes 11a, 11b and 11c and the return electrode 12, and may be formed with a microstripline, for example. The inductor L and the capacitance Cs constitute a resonance circuit. The inductance of the inductor L is determined such that this resonance frequency, f = 1/2π √ LCs, is about 1 GHz, for example.

The oscillator 13 is an oscillator which oscillates at a frequency determined from the inductor L and the capacitances Cs. The oscillation frequency depends on the change of the capacitance Cs. Therefore, FM modulation is performed correspondingly to the change of the capacitance Cs determined by the polarization domain corresponding to recorded data. Since each of the probes is oscillated and is superimposed at the respective one of the capacitances Cs in the polarization state, different AC signals are separately applied to the probes. On the basis of these AC signals, coherent detection is performed to separate a signal reproduced by each probe.

The inductors La, Lb, Lc and the capacitances Ca, Cb, Cc constitute the LC filters for preventing AC signals and data, both of which are applied to the relative probes, from interfering with the oscillator 13. This is because in using the plurality of probes, it is necessary to apply to each probe record data and an AC signal for coherent detection on reproduction, and this signal needs to be prevented from leaking to the oscillator 13.

The base material 18 is equipped in one piece with and holds: the probes 11a, 11b and 11c; the return electrode 12; the inductor L; the inductors La, Lb and Lc; the capacitances Ca, Cb and Cc; and the oscillator 13. The base material 18 may be made of an electric conductor and may be made into a case shape, so as to have an effect of electromagnetic wave cut-off. Moreover, the inductors La, Lb and Lc may be placed out of the base material 18.

The size of the head 2 is smaller than the wavelength of the resonance frequency (i.e. the oscillation frequency of the oscillator 13). If the wavelength of the resonance frequency is longer than 30 mm, the size of the head 2 is 30 mm or less than 30 mm. For example, if the resonance frequency is 1 GHz, the wavelength is about 30 cm, so that the head size will be an about 30 mm cube. If the frequency is low, the wavelength is substantially long, so that the head size will be 30 mm or less than 30 mm. If the head size is smaller than the oscillation frequency of the oscillator 13, it is possible to facilitate impedance matching. Thus, it is possible to design the head 2 easily, and it is possible to place and adjust the components of the head 2 easily.

The dielectric recording / reproducing heads in the first and second embodiments integrate all of or a part of their respective constitutional members by including them in a circuit by integration technique, e.g. the Monolithic Microwave Integrated Circuits (MMIC) technique. For example, they integrate in one piece the probe or probes; a holding device for holding the probe or probes; a mechanism device such as the return electrode; and an electric circuit device including the inductor, the oscillator, and further the filter. By this integration, it is possible to form a small, light, and high-performance dielectric recording / reproducing head.

### (First Embodiment of Dielectric Recording Medium Unit)

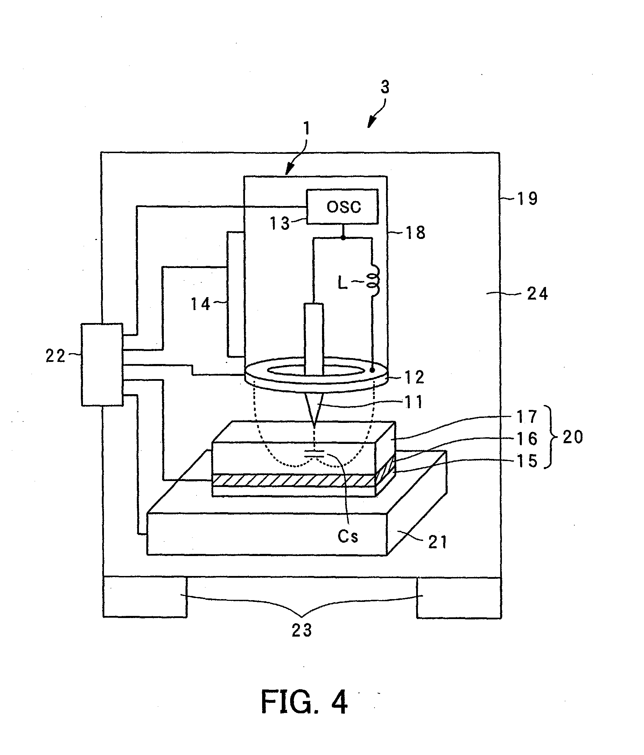

The first embodiment of the dielectric recording medium unit associated with the present invention will be explained with reference to FIG. 4. In this embodiment, the dielectric recording / reproducing head 1, which is explained in the first embodiment of the dielectric recording / reproducing head, and the dielectric recording medium 20 are enclosed in a package. In this package, a moving mechanism for moving the dielectric recording / reproducing head 1 or the dielectric recording medium 20 in the X-Y direction may is installed. The unit is detachable and replaceable.

In a dielectric recording medium unit 3, the dielectric recording / reproducing head 1; a tracking mechanism 14 of the dielectric recording / reproducing head 1; the dielectric recording medium 20 placed facing to the probe 11 of dielectric recording / reproducing head 1; and a X-Y stage 21 for parallel-translating the dielectric recording medium 20 are installed in a package 19. Moreover, the package 19 is provided with: an electrical connection device 22 for allowing the electrical connection with an external apparatus; and mechanical connection devices 23 for allowing the mechanical connection with the external apparatus.

The tracking mechanism 14 is a mechanism for the probe 11 tracing recording tracks of the dielectric recording medium 20. On the basis of a tracking error signal detected from a signal reproduced by the probe 11, the position of the dielectric recording / reproducing head 1 or the direct position of the probe 11 is controlled.

The X-Y stage 21 mounts thereon the dielectric recording medium 20 and determines the position of the dielectric recording medium 20. It precisely feeds the dielectric recording medium 20 having a plurality of linear tracks in the track direction and perpendicular to it and determines a recording / reproducing position.

The electrical connection device 22 is attached to the package 19 and electrically connects the external apparatus with the return electrode 12 and the oscillation 13, the tracking mechanism 14, the electrode 16 of the dielectric recording medium 20, the X-Y stage 21 and the like.

The mechanical connection devices 23 are attached to the package 19. The dielectric recording medium unit 3 can be mechanically connected with the external apparatus through the mechanical connection device 23. It is also possible to construct in one piece the electrical connection device 22 and the mechanical connection devices 23 to take the electrical connection by a mechanical attachment operation. Moreover, the mechanical connection device 23 is provided with a vibration proof structure so that vibration from the external apparatus is not transmitted to the package 19, which prevents malfunction of the dielectric recording medium unit 3 due to the vibration. This can be applied to a device for a vehicle.

The package 19 is filled with an inert gas 24 such as nitrogen, so that it is possible to maintain such a stable condition that any chemical change is not generated on the surfaces of the probe 11 and the dielectric recording medium 20 within the package 19.

Incidentally, the dielectric recording / reproducing head 1 may be replaced with the dielectric recording / reproducing head 2 shown in FIG. 3. In this case, it is necessary to provide an application device for applying an AC signal for coherent detection supplied to each probe.

### (Second Embodiment of Dielectric Recording Medium Unit)

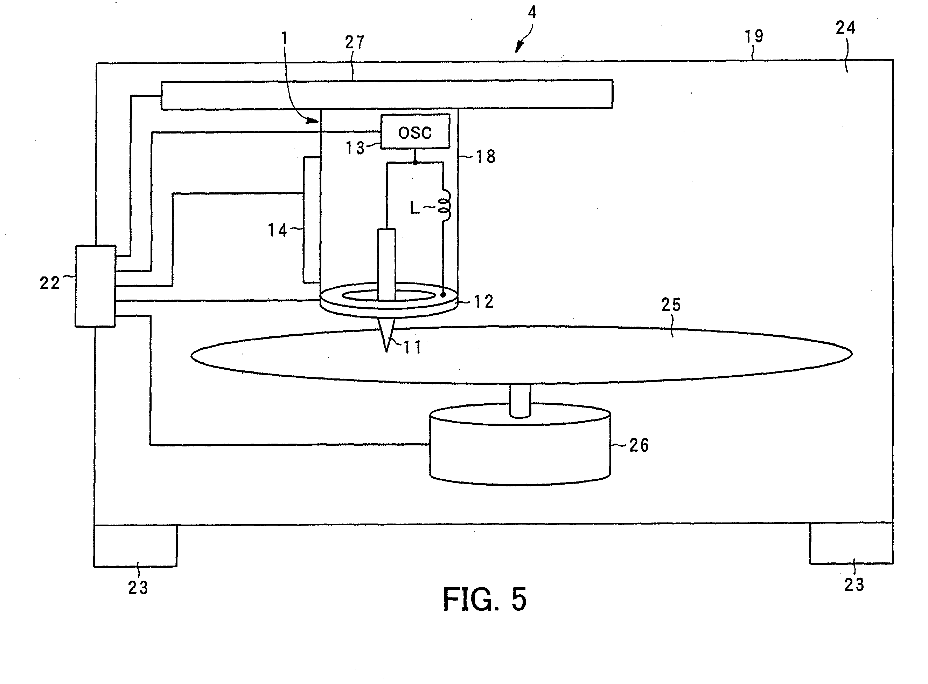

The second embodiment of the dielectric recording medium unit associated with the present invention will be explained with reference to FIG. 5 to FIG. 7. In this embodiment, the dielectric recording / reproducing head 1, which is explained in the first embodiment of the dielectric recording / reproducing head, and a dielectric recording medium 25 are enclosed in a package with them being rotatable. The unit is detachable and replaceable.

As shown in FIG. 5, a dielectric recording medium unit 4 associated with this embodiment differs from the dielectric recording medium unit 3 explained in the first embodiment, in using the disk-shaped dielectric recording medium 25 as a recording medium and rotating the dielectric recording medium 25 by using a motor 26 to perform recording / reproducing. The explanations of the same constitutional elements are omitted.

The disk-shaped dielectric recording medium 25 has thereon concentric recording tracks or spiral recording tracks, and is rotated by the motor 26 at the predetermined number of revolutions. The dielectric recording / reproducing head 1 is moved by a slider 27 in the radial direction of the dielectric recording medium 25, thereby controlling its position. Moreover, tracking can be performed by controlling the dielectric recording / reproducing head 1 to move in the disc diameter direction using the slider 27 with respect to low frequency components, and by directly controlling the position of the probe 11 with respect to high frequency components, on the basis of a tracking error signal detected from a signal reproduced by the probe 11.

Incidentally, the dielectric recording / reproducing head 1 may be replaced with the dielectric recording / reproducing head 2 shown in FIG. 3. In this case, it is necessary to provide an application device for applying an AC signal for coherent detection supplied to each probe. In addition to the X-Y stage for controlling a recording / reproducing position, it is possible to provide a Z-direction adjustment mechanism for controlling the contact pressure of the recording medium and the probe or controlling the space of them.

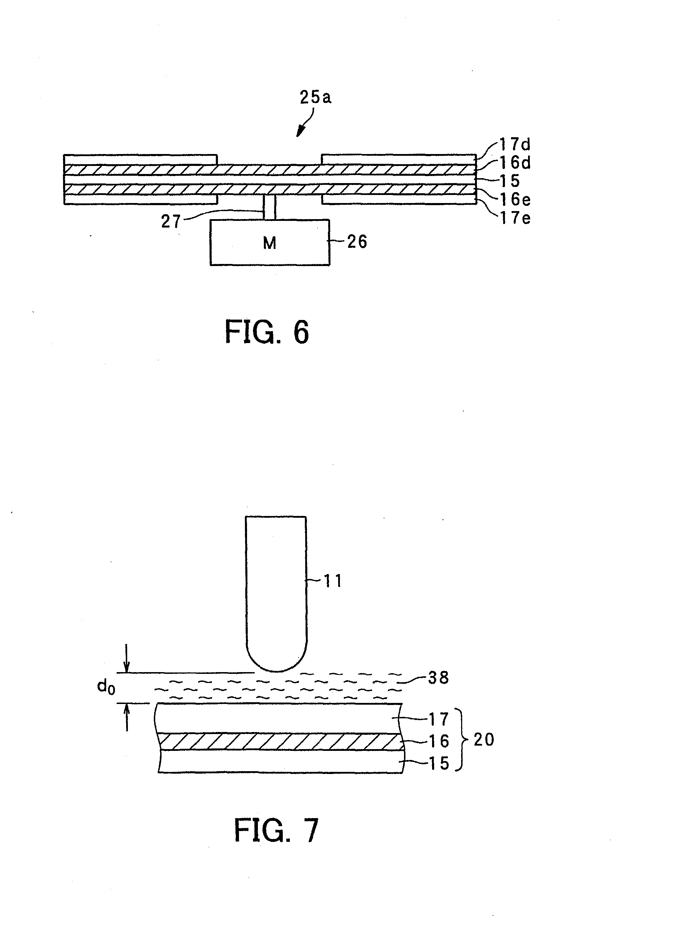

With regard to the dielectric recording medium 25, as shown in FIG. 6, there is a dielectric recording medium 25a having dielectric materials 17d and 17e on its both sides. Sandwiching a substrate 15 of the central layer, there are electrodes 16d and 16e. On the respective surfaces, there are placed recording / reproducing layers, which are the dielectric materials 17d and 17e. The electrodes 16d and 16e are electrically connected with each other via a rotating shaft 27 of the motor 26. From the rotating shaft 27, it is possible to input a signal and earth via a slip ring, for example.

FIG. 7 shows that the probe 11 faces to the dielectric material 17 with a distance do. A lubricant 38 is applied on the dielectric material 17, and it is filled the small space between the tip of the probe 11 and the surface of the dielectric material 17. As the lubricant 38, an insulating fluorinated lubricant may be preferably used, for example, preventing the abrasion of the probe 11 and the dielectric material 17. Incidentally, it is also possible to take the same structure in the dielectric recording medium unit 3.

The dielectric recording media 20 and 25 and the probe 11 need to relatively move for recording / reproducing. However, the dielectric recording medium 25 is rotated by a rotation device, for example, or the dielectric recording medium 20 is linearly moved by the X-Y stage 21 on a plane surface. At this time, the probe 11 needs to be held facing to the dielectric recording medium 20 or 25.

As a means to hold it, a suspension arm used as in the HDD may be used. In this case, in order to reduce the inertia of the suspension arm, the probe 11 and the oscillator 13 are separated, and are placed such that the center of the gravity is on the rotating shaft of the suspension arm. If the probe 11 and the oscillator 13 are not separated, the balance weight is placed on the opposite side to the rotating shaft, and is placed such that the center of the gravity by these is on the rotating shaft of the suspension arm, so that it is possible to obtain rapid responsiveness of the head.

### (Embodiment of Dielectric Recording / Reproducing Apparatus)

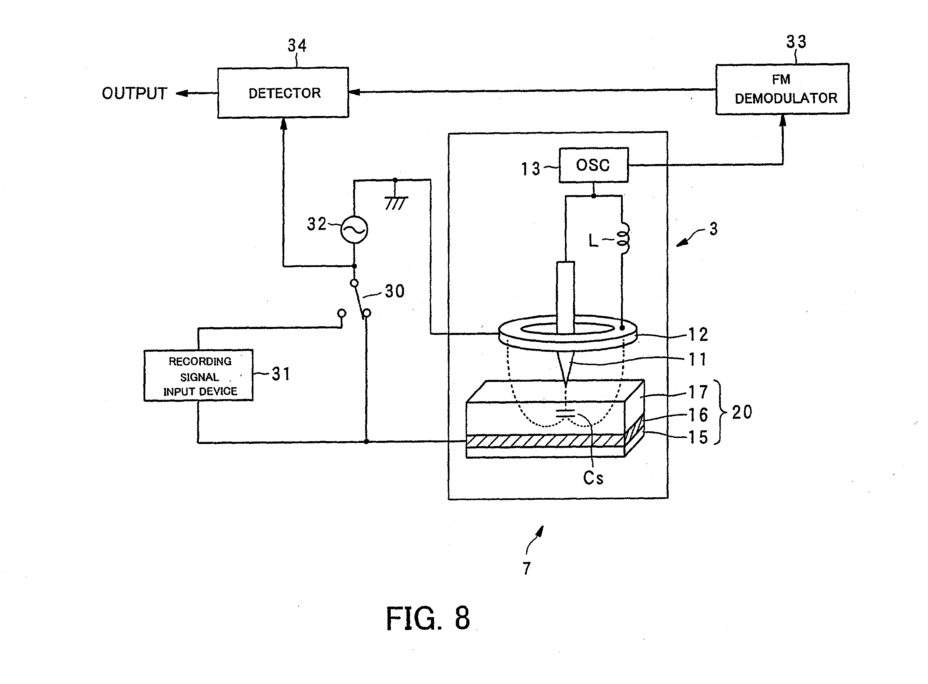

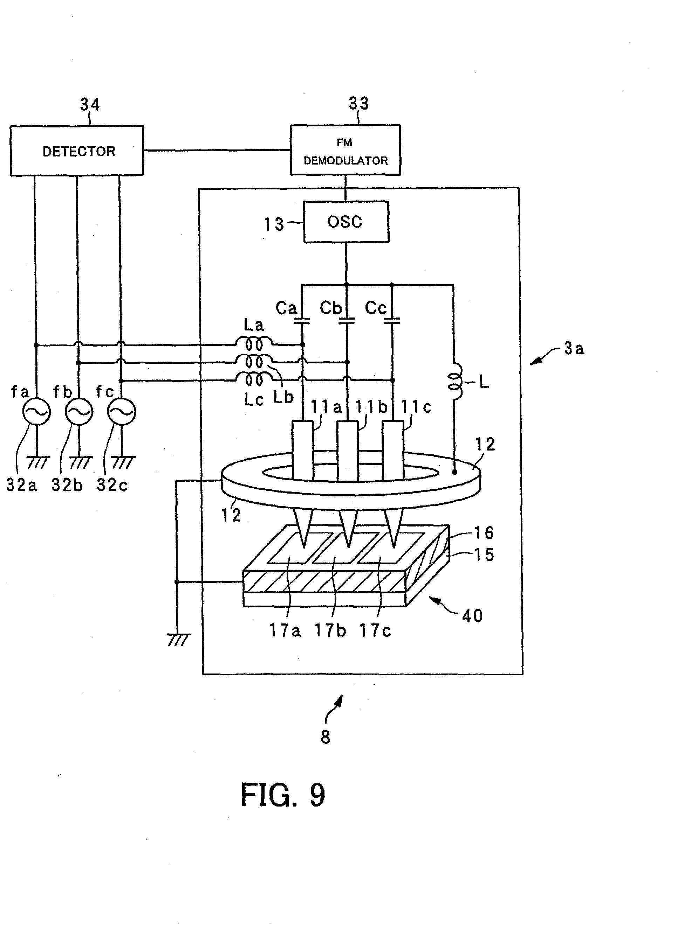

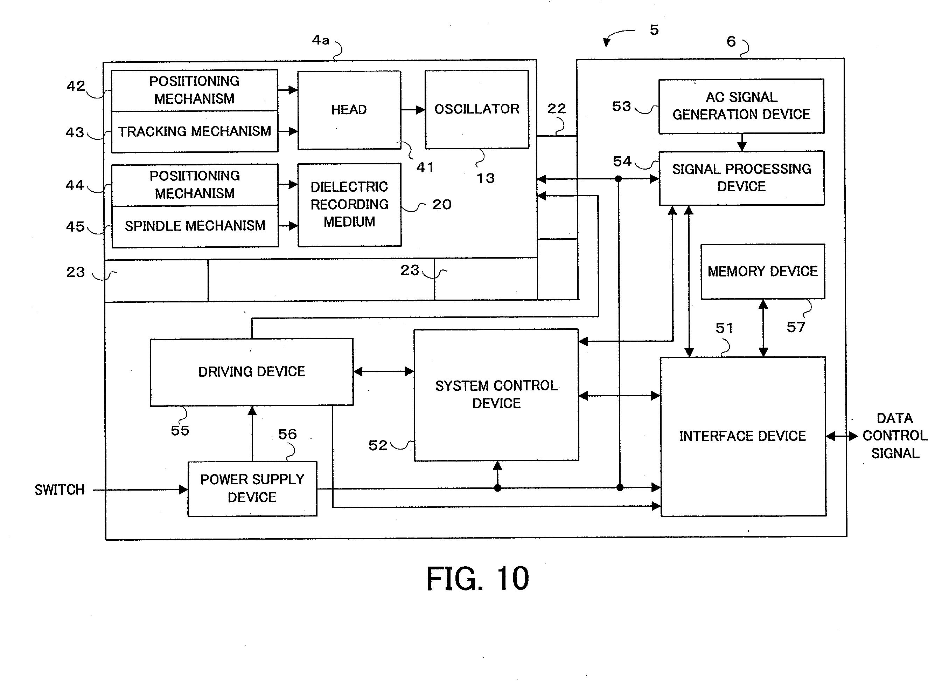

The embodiment of the dielectric recording / reproducing apparatus of the present invention will be explained with reference to FIG. 8 to FIG. 10. FIG. 8 is a schematic diagram showing a structure example of the dielectric recording / reproducing apparatus using the first embodiment of the dielectric recording medium unit. FIG. 9 is a schematic diagram showing a structure example of the dielectric recording / reproducing apparatus using the second embodiment of the dielectric recording medium unit. FIG. 10 is a block diagram showing the structure of a circuit block of the dielectric recording / reproducing apparatus.

As shown in FIG. 8, in the dielectric recording / reproducing apparatus 7 having one probe 11, a recording signal input device 31 and an Alternating Current (AC) signal generation device 32 are connected by a switch 30 for switching an input signal in recording / reproducing to the dielectric recording medium unit 3 when recording, and thus recording signal (record data) outputted form the recording signal input device 31 is supplied to the electrode 16 of the dielectric recording medium 20. On the other hand, only the AC signal generation device 32 is connected when reproducing.

When recording, a recording signal from the recording signal input device 31 is superimposed on an AC signal of the AC signal generation device 32, and this is supplied to the electrode 16. By an electric field between the probe 11 and the electrode 16 generated by the recording signal, the polarization of a domain of the dielectric material 17 just under the probe 11 is determined. Then, the polarization direction is fixed and becomes record data. At this time, the oscillator 13 oscillates at a resonance frequency determined from the inductor L and the capacitance Cs, and the frequency is modulated by the capacitance Cs. This FM-modulated wave is demodulated at a FM demodulator 33, and this is inputted to a detector 34. Moreover, the AC signal from the AC signal generation device 32 is also inputted to the detector 34. On the basis of the signal, the coherent detection of the signal demodulated at the FM demodulator 33 is performed to reproduce the recorded data. Namely, it is possible to monitor the recording state while recording.

When reproducing, the recording signal input device 31 is disconnected by the switch 30, and only the AC signal is supplied to the electrode 16. The oscillator 13 oscillates at a resonance frequency formed by the inductor L and the capacitance Cs in the domain already polarized correspondingly to record data. Therefore, the oscillation signal is FM-modulated by the capacitance Cs, and this signal is demodulated at the FM demodulator 33 and is inputted to the detector 34. Moreover, the AC signal from the AC signal generation device 32 is also inputted to the detector 34. On the basis of the signal, the coherent detection of the signal demodulated at the FM demodulator 33 is performed to reproduce the record data.

Incidentally, a coherent detection apparatus such as a lock-in amplifier may be used as the detector 34, for example. Although the recording signal and the AC signal can be inputted from the side of the probe 11, it is necessary to provide a filter in order to prevent the leakage of the signal into the oscillator 13. Moreover, the electrode 16 is earthed at this time.

FIG. 9 shows the structure of the dielectric recording / reproducing apparatus 8 as a reproducing apparatus if there are a plurality of probe 11. For example, in a dielectric recording medium unit 3a, there are three probes 11a 11b and 11c, and a dielectric recording medium 40 has the dielectric materials 17a, 17b, and 17c, each of which corresponds to the respective one of the probes.

AC signals fa, fb and fc are supplied to the respective electrodes via the inductors La, Lb and Lc, respectively. Each of the electrodes and the oscillator are connected via the respective one of the capacitances Ca, Cb, and Cc. The inductors La, Lb and Lc, and the capacitances Ca, Cb and Cc form the LC filters with respect to the oscillator 13 so that the AC signals do not have an effect on the oscillator 13.

In the case of reproducing, the oscillator 13 oscillates at a resonance frequency formed by the inductor L and the capacitances Cs in the domains corresponding to the respective probes and already polarized correspondingly to data. Therefore, the oscillation signals are FM-modulated by the capacitances Cs, and these signals are demodulated at the FM demodulator 33 and are inputted to the detector 34. Moreover, the AC signals from the AC signal generation devices 32 are also inputted to the detector 34. On the basis of these signals, the coherent detection of the signals demodulated at the FM demodulator 33 is performed to reproduce the recorded data. Namely, the AC signals fa, fb and fc are inputted to the detector 34 to perform the coherent detection, so that it is possible to divide and output the data reproduced by the respective probe.

Moreover, it is possible to record data by superimposing the recording signals to the AC signals fa, fb and fc, and applying them to the respective probes. In addition, the operation and the function are the same as those of the dielectric recording / reproducing apparatus in FIG. 8.

Next, the system configuration of the dielectric recording / reproducing apparatus will be explained with reference to FIG. 10. A dielectric recording / reproducing apparatus 5 is constructed such that a dielectric recording medium unit 4a as shown in FIG. 5, for example, is unified with an external apparatus 6 using an attachment device detachable to the apparatus 6.

The dielectric recording medium unit 4a is provided with: the dielectric recording medium 20; a head 41; a positioning mechanism 42 and a tracking mechanism 43 for the head 41; a positioning mechanism 44 and a spindle mechanism 45 for the dielectric recording medium 20; and the oscillator 13.

The external apparatus 6 is provided with: an interface device 51 for controlling the input / output of data and a control signal; a system control device 52 for controlling the operation of the whole apparatus; an AC signal generation device 53 for generating an AC signal used as a signal for coherent detection in recording / reproducing; a signal processing device 54 for processing signals which are reproduced / recorded; a driving device 55 for driving the position control and the recording / reproducing operation of the head 41 and the dielectric recording medium 20; an power supply device 56 for generating an power supply necessary in the apparatus; and a memory device 57 for temporarily storing data, provided with a semiconductor memory.

The dielectric recording medium unit 4a is connected to the external apparatus 6 by the electrical connection device 22, allowing the transport of the power supply, the reproducing signal, the recording signal, the control signal and the like, and can be easily detached from the external apparatus 6 by the mechanical connection devices 23. By providing the vibration proof structure for the mechanical connection devices 23, it is possible to cut off the vibration from the external apparatus 6. The external apparatus 6 may be provided with an attachment device for attaching it to other equipment.

In an operation of the tracking servo for the head 41, for example, the signal processing device 54 detects a tracking error signal on the basis of the reproduced signal. The system control device 52 determines an actual control amount and transmits it to the driving device 55. The driving device 55 generates driving signals to drive the positioning mechanism 42 and the tracking mechanism 43.

At the signal processing device 54, the formatting and encryption of data to be recorded and the like are performed, and the error correction and the decryption of the reproduced data and the like are performed.

By providing the memory device 57, it is possible to temporarily store the data to be recorded inputted via the interface device 51, and thus it is possible to record while trying to adjust recording timing with the dielectric recording medium unit 4a. Moreover, it is possible to temporality store the reproduced data and output it to the exterior while considering output timing.

## Claims

1. A dielectric recording / reproducing head (1) **characterized in that** the dielectric recording / reproducing head comprises:
a first electrode (11) for applying a high frequency signal to a dielectric material (17) of a dielectric recording medium (20);
a second electrode (12) for returning the high frequency signal applied to the dielectric material by the first electrode;
an inductor (L) placed between the first electrode and the second electrode; and
an oscillator (13) for generating the high frequency signal having a frequency determined by an inductance of the inductor and a capacitance including a capacitance (Cs) corresponding to a nonlinear dielectric constant of the dielectric material just under the first electrode, and
the first electrode, the second electrode, the inductor and the oscillator are connected through conductive materials.

2. The dielectric recording / reproducing head (1) according to claim 1 **characterized in that** the first electrode, the second electrode, the inductor and the oscillator are assembled in a continuous space.

3. The dielectric recording / reproducing head (1) according to claim 1 or 2 **characterized in that** the first electrode, the second electrode and the oscillator are assembled on a single solid substance (18).

4. The dielectric recording / reproducing head (1) according to any one of claims 1 to 3 **characterized in that** the size of the dielectric recording / reproducing head is smaller than the wavelength of the high frequency signal, and said size is smaller than 30 mm.

5. The dielectric recording / reproducing head (1) according to any one of claims 1 to 4 **characterized in that**, when information is recorded in the dielectric material (17) of the dielectric recording medium (20), the first electrode (11) applies a recording signal to the dielectric material.

6. A dielectric recording / reproducing head (2) **characterized in that** the dielectric recording / reproducing head comprises:
a plurality of first electrodes (11a, 11b 11c) for applying high frequency signals to a dielectric material (17) of a dielectric recording medium (20) respectively;
a second electrode (12) for returning the high frequency signals applied to the dielectric material by the plurality of first electrodes;
an inductor (L) placed between the plurality of first electrodes and the second electrode;
an oscillator (13) for generating the high frequency signals each having a frequency determined by an inductance of the inductor and a capacitance including a capacitance corresponding to a nonlinear dielectric constant of the dielectric material just under respective one of the plurality of first electrodes; and
a low-cut filter (La, Lb, Lc, Ca, Cb, Cc) placed between the oscillator and a signal supply source for supplying a plurality of signals to the plurality of first electrodes respectively, and
the plurality of first electrodes, the second electrode, the inductor, the oscillator and the low-cut filter are connected through conductive materials.

7. The dielectric recording / reproducing head (2) according to claim 6 **characterized in that** the plurality of first electrodes, the second electrode, the inductor, the oscillator and the low-cut filter are assembled in a continuous space.

8. The dielectric recording / reproducing head (2) according to claim 6 or 7 **characterized in that** the plurality of first electrodes, the second electrode, the oscillator and the low-cut filter are assembled on a single solid substance (18).

9. The dielectric recording / reproducing head (2) according to any one of claims 6 to 8 **characterized in that** the size of the dielectric recording / reproducing head is smaller than a wavelength of each one of the high frequency signals, and said size is smaller than 30 mm.

10. The dielectric recording / reproducing head (2) according to any one of claims 6 to 9 **characterized in that**, when the information is recorded in the dielectric material of the dielectric recording medium, the plurality of first electrodes apply recording signals to the dielectric material respectively.

11. The dielectric recording / reproducing head (1, 2) according to any one of claims 1 to 10 **characterized in that** all of or a part of the constitutional members of the dielectric recording / reproducing head are integrated.

12. The dielectric recording / reproducing head (1, 2) according to any one of claims 1 to 11 **characterized in that** the dielectric recording / reproducing head reproduces information recorded in the dielectric material (17) of the dielectric recording medium (20) according to a scanning nonlinear dielectric microscopy method.

13. A dielectric recording medium unit (3, 4) **characterized in that** the dielectric recording medium unit comprises:
a dielectric recording / reproducing head (1);
a dielectric recording medium (20, 25) provided with a dielectric material (17); and
a package (19) for enclosing the dielectric recording / reproducing head and the dielectric recording medium,
the dielectric recording / reproducing head comprises:
a first electrode (11) for applying a high frequency signal to the dielectric material of the dielectric recording medium;
a second electrode (12) for returning the high frequency signal applied to the dielectric material by the first electrode;
an inductor (L) placed between the first electrode and the second electrode; and
an oscillator (13) for generating the high frequency signal having a frequency determined by an inductance of the inductor and a capacitance including a capacitance (Cs) corresponding to a nonlinear dielectric constant of the dielectric material just under the first electrode, and
the first electrode, the second electrode, the inductor and the oscillator are connected through conductive materials.

14. The dielectric recording medium unit (3, 4) according to claim 13 **characterized in that** the first electrode, the second electrode, the inductor and the oscillator are assembled in a continuous space.

15. A dielectric recording medium unit (3a) **characterized in that** the dielectric recording medium comprises:
a dielectric recording / reproducing head (2);
a dielectric recording medium (40) provided with a dielectric material (17a, 17b, 17c); and
a package for enclosing the dielectric recording / reproducing head and the dielectric recording medium,
the dielectric recording / reproducing head comprises:
a plurality of first electrodes (11a, 11b, 11c) for applying high frequency signals to the dielectric material of the dielectric recording medium respectively;
a second electrode (12) for returning the high frequency signals applied to the dielectric material by the plurality of first electrodes;
an inductor (L) placed between the plurality of first electrodes and the second electrode;
an oscillator (13) for generating the high frequency signals each having a frequency determined by an inductance of the inductor and a capacitance including a capacitance corresponding to a nonlinear dielectric constant of the dielectric material just under respective one of the plurality of first electrodes; and
a low-cut filter (La, Lb, Lc, Ca, Cb, Cc) placed between the oscillator and a signal supply source for supplying recording signals to the plurality of first electrodes, and
the plurality of first electrodes, the second electrode, the inductor, the oscillator and the low-cut filter are connected through conductive materials.

16. The dielectric recording medium unit (3a) according to claim 15 **characterized in that** the first electrode, the second electrode, the inductor and the oscillator are assembled in a continuous space.

17. The dielectric recording medium unit (3, 3a, 4) according to any one of claims 13 to 16 **characterized in that** the dielectric recording medium (25a) comprises a substrate (15) and at least two dielectric material membranes (17d, 17e) which are formed on one surface and an opposite surface of the substrate respectively.

18. The dielectric recording medium unit (3, 3a, 4) according to any one of claims 13 to 16 **characterized in that** the dielectric material (17, 17a, 17b, 17c) is a ferroelectric material.

19. The dielectric recording medium unit (3, 3a, 4) according to claim 18 **characterized in that** the ferroelectric material is LiTaO₃.

20. The dielectric recording medium unit (3, 3a) according to any one of claims 13 to 19 **characterized in that** the dielectric recording medium unit further comprises a moving device (21) for linearly moving either of the dielectric recording medium (20) and the first electrode (11, 1a, 11b 11c) of the dielectric recording / reproducing head (1, 2).

21. The dielectric recording medium unit (4) according to any one of claims 13 to 19 **characterized in that** the dielectric recording medium unit further comprises a rotating device (26) for rotating the dielectric recording medium (25).

22. The dielectric recording medium unit (4) according to any one of claims 13 to 19 **characterized in that** the dielectric recording medium unit further comprises a tracking device (27) for enabling the first electrode (11) of the dielectric recording / reproducing head (1) to track an information track recorded in the dielectric recording medium.

23. The dielectric recording medium unit (3, 3a, 4) according to any one of claims 13 to 22 **characterized in that** the first electrode (11, 11a, 11b, 11c) of the dielectric recording / reproducing head (1, 2) and the dielectric material (17, 17a, 17b, 17c) of the dielectric recording medium (20, 25, 40) are placed with a predetermined space (d₀).

24. The dielectric recording medium unit (3, 3a, 4) according to any one of claims 13 to 23 **characterized in that** a lubricant (38) is provided between the first electrode (11, 11a 11b 11c) of the dielectric recording / reproducing head (1, 2) and the dielectric material (17, 17a, 17b, 17c) of the dielectric recording medium (20, 25, 40).

25. The dielectric recording medium unit (3, 3a, 4) according to claim 24 **characterized in that** the lubricant (38) is an insulating material.

26. The dielectric recording medium unit (3, 3a, 4) according to claim 24 **characterized in that** the lubricant (38) is a fluorinated lubricant.

27. The dielectric recording medium unit (3, 3a, 4) according to any one of claims 13 to 26 **characterized in that** the package (19) is filled with an inert gas (24).

28. The dielectric recording medium unit (3, 3a, 4) according to any one of claims 13 to 27 **characterized in that** the package (19) comprises a vibration proof device for cutting off vibration transmitted from the outside of the dielectric recording medium unit.

29. The dielectric recording medium unit (3, 3a, 4) according to any one of claims 13 to 28 **characterized in that** the package (19) comprises an electrical connection device (22) detachable to another member.

30. A dielectric recording / reproducing apparatus (5, 7) for recording information in a dielectric recording medium (20) and for reproducing the information from the dielectric recording medium **characterized in that** the dielectric recording / reproducing apparatus comprises:
a dielectric recording medium unit (3) comprising a dielectric recording / reproducing head (1), the dielectric recording medium (20), and a package (19) for enclosing the dielectric recording / reproducing head and the dielectric recording medium;
an alternating current signal generation device (32, 53) for generating an alternating current signal whose frequency is lower than a frequency of a high frequency signal to generate an alternating electric field in a dielectric material (17) of the dielectric recording medium;
an information processing device (31, 54) for processing the information to be recorded in the dielectric recording medium and the information reproduced from the dielectric recording medium;
a control signal generation device (52) for generating control signals for the dielectric recording medium unit; and
a driving device (55) for driving the dielectric recording medium unit on the basis of the control signals by the control signal generation device,
the dielectric recording / reproducing head comprises:
a first electrode (11) for applying the high frequency signal to the dielectric material of the dielectric recording medium;
a second electrode (12) for returning the high frequency signal applied to the dielectric material by the first electrode;
an inductor (L) placed between the first electrode and the second electrode; and
an oscillator (13) for generating the high frequency signal having the frequency determined by an inductance of the inductor and a capacitance including a capacitance corresponding to a nonlinear dielectric constant of the dielectric material just under the first electrode, and
the first electrode, the second electrode, the inductor and the oscillator are connected through conductive materials.

31. The dielectric recording / reproducing apparatus (5, 8) according to claim 30 **characterized in that** the first electrode, the second electrode, the inductor and the oscillator are assembled in a continuous space.

32. A dielectric recording / reproducing apparatus (5, 8) for recording information in a dielectric recording medium (40) and for reproducing the information from the dielectric recording medium **characterized in that** the dielectric recording / reproducing apparatus comprises:
a dielectric recording medium unit (3a) comprising a dielectric recording / reproducing head (2), the dielectric recording medium, and a package for enclosing the dielectric recording / reproducing head and the dielectric recording medium;
a plurality of alternating current signal generation devices (32a, 32b, 32c) for generating alternating current signals each having frequency lower than a frequency of respective one of high frequency signals to generate alternating electric fields in a dielectric material of the dielectric recording medium;
an information processing device (54) for processing the information to be recorded in the dielectric recording medium and the information reproduced from the dielectric recording medium;
a control signal generation device (52) for generating control signals for the dielectric recording medium unit; and
a driving device (55) for driving the dielectric recording medium unit on the basis of the control signals by the control signal generation device,
the dielectric recording / reproducing head comprises:
a plurality of first electrodes (11a 11b, 11c) for applying the high frequency signals to the dielectric material of the dielectric recording medium respectively;
a second electrode (12) for returning the high frequency signals applied to the dielectric material by the plurality of first electrodes;
an inductor (L) placed between the plurality of first electrodes and the second electrode;
an oscillator (13) for generating the high frequency signals each having a frequency determined by an inductance of the inductor and a capacitance including a capacitance corresponding to a nonlinear dielectric constant of the dielectric material just under respective one of the plurality of first electrodes; and
a low-cut filter (La, Lb, Lc, Ca, Cb, Cc) placed between the oscillator and a signal supply source for supplying a plurality of signals to the plurality of first electrodes respectively, and
the plurality of first electrodes, the second electrode, the inductor, the oscillator and the low-cut filter are connected through conductive materials.

33. The dielectric recording / reproducing apparatus (5, 7, 8) according to claim 32 **characterized in that** the plurality of first electrodes, the second electrode, the inductor, the oscillator and the low-cut filter are assembled in a continuous space.

34. The dielectric recording / reproducing apparatus (5, 7, 8) according to any one of claims 30 to 33 **characterized in that** the dielectric recording / reproducing apparatus further comprises a semiconductor memory (57) for temporarily storing the information to be recorded in the dielectric recording medium or the information reproduced from the dielectric recording medium.
